# EUROPEAN PATENT APPLICATION

(11) **EP 4 492 634 A1**
(43) Date of publication of application: **15.01.2025**
(21) Application number: 23185465.4
(22) Date of filing: 14.07.2023
(51) Int. Cl.: H02K 1/14, H02K 1/2791, H02K 7/18, H02K 15/03

(54) **MANUFACTURING A WIND TURBINE GENERATOR**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

It is described a method of assembling a generator (1) for a wind turbine (50), the method comprising: determining (RBMS) plural first inner radii (r1) of an assembly comprising a rotor house (6) and a bearing (5); measuring (IMIC) heights (h) of plural magnet modules (9); determining positions of the plural magnet modules (9) at the rotor house (6); calculating second inner radii (r2) of the rotor house-bearing assembly and determining a minimum second inner radius; measuring geometry information (FSMS) of a first mounting surface (3) and/or a second mounting surface (4) of a stator base structure (2); mounting (FSAC) plural stator segments (8) at the stator base structure (2), in order to obtain a stator assembly; coupling the rotor house-bearing assembly (5, 6) with the stator assembly (2, 8, 7); mounting (MMIC) the magnet modules (9) at the rotor house (6).

## Description

### Field of invention

The present invention relates to a method and to a corresponding arrangement of assembling a generator for a wind turbine. Furthermore, the present invention relates to a wind turbine generator manufactured according to the manufacturing method and further relates to a wind turbine comprising the generator.

### Art Background

Manufacturing a wind turbine generator is a complicated task especially due to the high weight and big size of the generator components and the completed generator. Critical in manufacturing a generator might be the control of the air gap size, i.e., the gap between the stator and the rotor.

Thus, there may be a need for a method and a corresponding arrangement of assembling a generator for a wind turbine, wherein the generator to a higher degree adheres to design requirements and in particular wherein the air gap size adheres to a higher degree to specifications.

### Summary of the Invention

This need may be met by the subject matter according to the independent claims. Advantageous embodiments of the present invention are described by the dependent claims.

According to an embodiment of the present invention it is provided a method of assembling a generator for a wind turbine, the method comprising: determining, using optical measurements, plural first inner radii of an assembly comprising a rotor house and a bearing across a circumference; measuring heights of plural magnet modules; determining, in particular circumferential and/or axial, positions of the plural magnet modules at the rotor house based on their respective heights and based on the first inner radii of the rotor house-bearing assembly (e.g. the first inner radii may be defined as the distance from the rotation axis of the bearing to an inner surface of the rotor house); calculating second inner radii of the rotor house-bearing assembly having magnet modules mounted according to the determined positions, and determining a minimum second inner radius; measuring geometry information of a first (front) mounting surface and/or a second (back) mounting surface of a stator base structure (e.g. fix shaft); mounting plural stator segments, in particular including stator windings, at the stator base structure in dependence of the measured geometry of the first and/or second mounting surface of the stator base structure and the minimum second inner radius of the rotor house-bearing assembly, in order to obtain a stator assembly; coupling the rotor house-bearing assembly, in particular via the bearing, with the stator assembly; mounting the magnet modules at the rotor house according to the determined positions.

The generator may be a permanent magnet synchronous generator. The generator may comprise an outer rotor being rotatably supported by the bearing to allow rotation around the stator. The rotor house as well as the bearing may have been manufactured in advance. The rotor house may in particular be a (iron or steel) cast part and/or welded part which cannot be modified any more.

The rotor house and the bearing may have been assembled previously also involving defining and arranging the rotor house and the bearing at correct positions and orientations and confirming the correct relative positioning by measurements, in particular optical measurements, as will be described below.

The bearing may also be referred to as a main bearing and the rotor house and the stator assembly may be mounted to each other via the bearing.

The rotor house may be equipped with one or more stiffening rings, such as brake disk. The rotor house may be free of any permanent magnets when performing the optical measurements. The rotor house may comprise plural tracks or traces including retention structures, for example in a T-shape, for later holding plural magnets which may later be inserted along an axial direction into the tracks or trails. The tracks or trails may be provided at a radially inner surface of the rotor house.

The optical measurements may use an optical rotation system, like a Laser tracker and/or a LIDAR system being capable to measure, from a fixed position of the LIDAR device, distances to plural points, in particular to plural points at the radially inner surface of the rotor house. From the plural measurements of the rotor house, a symmetry axis of the rotor house (assembled with the bearing) may be obtained and the first inner radii may be the distances between this symmetry axis and the plural positions on the radially inner surface of the rotor house.

The heights of the plural magnet modules (not yet mounted at the rotor house) may advantageously be measured in order to detect deviations (e.g. having a minimum and a maximum height, the height having Gauss distribution) from design heights of the plural magnet modules due to manufacturing tolerances. The measurement of the heights may be performed by an optical method or by other methods. The magnet height may by measured at between 30 and 100 locations across the extent of the magnet. The magnets may be placed on a conveyer belt and may be in this was transported to the optical measurement station. Optionally also lateral dimension(s) of the magnet may be measured.

Measuring the plural points on the radially inner surface of the rotor house may involve to detect that the inner surface of the rotor house is not exactly circular in shape but may have a slightly oval shape. The plural magnet modules may then be ordered or arranged or positioned at the radially inner surface of the rotor house such that the deviation from the circular shape is reduced by for example placing or simulating a placement of a relatively high magnet module at a position of the radially inner surface of the rotor house where the rotor house bulges out, i.e., having a relatively large radius. Further relatively less high magnet modules may be simulated to be placed at regions of the radially inner surface of the rotor house where the measured radius is less than the expected radius for an ideal circle. It is noted that the magnet modules are not yet mounted at the rotor house. Thus, the second inner radii may be purely simulated or calculated based on the already measured first radii as well as from the plural magnet modules heights. The second inner radii may be calculated by subtracting the height of the respective magnet module (simulated or assumed to be) mounted at a particular position at the inner surface of the rotor house from the inner radius of the rotor house at this position.

The thus calculated second inner radii (minus a minimal air gap) may give an upper limit of the outer radius or the biggest outer radius of the stator assembly to be assembled and manufactured.

The minimal rotor house radius minus the smallest magnet height may define the outer circle. The maximum radius of the stator may be the minimal rotor house radius minus the smallest magnet height minus the minimal air gap size.

The stator base structure may also be referred to as a fixed shaft or fix shaft in the following. The stator base structure may substantially be a cylinder symmetric structure or ring structure having on axial ends the first and second mounting surfaces. At the first or second mounting surface the bearing may be mounted later. At the remaining mounting surface, the generator may be mounted to a nacelle of the wind turbine.

The determination of the geometry of the respective mounting surfaces may involve to determine the relative orientation of the first and second mounting surface, in particular regarding parallel orientation, and may also include information regarding the midpoints of the first and second mounting surfaces and in particular also an axis joining or connecting the two midpoints of the mounting surfaces. The mounting surface(s) may in particular include a ring-shaped flat or plane surface(s). The mounting surfaces may be configured as flanges or surfaces of flanges. The bearing may for example be mounted at the first or second mounting surface using plural bolts.

The geometry information of the mounting surfaces may advantageously be utilized for appropriately positioning and orienting the plural stator segments and mounting them to the stator base structure. The plural stator segments may then be mounted to the stator base structure such that the maximum outer radius of the completed stator arrangement is smaller in particular by an intended air gap size than the minimum second inner radius as simulated or calculated for the rotor house having (simulated) mounted magnet modules.

The coupling of the rotor house-bearing assembly with the rotor assembly may be at the first or the second mounting surface of the stator base structure.

As a last step, the magnet modules may be mounted or inserted. Thereby, the magnet modules may in particular be inserted piece by piece into plural rails or tracks provided at the radially inner surface of the rotor house retaining the magnet modules.

When the generator is manufactured according to the above-described embodiment, the air gap size may be obtained according to design requirements in an accurate manner. Further, manufacturing tolerances conventionally observed for the several generator components may partly be compensated, by appropriately positioning the magnet modules and also by readjusting several components relative to each other with the help of using the measurement results of the measurements performed during the manufacturing process.

According to an embodiment of the present invention, the plural first inner radii of the rotor house-bearing assembly are determined from optical measurements using a LIDAR, in particular for plural axial positions.

LIDAR may provide reliable distance measurement results and may be applied in a simple manner, for example using a LIDAR device which is arranged at a fixed position and which may by rotating one or more mirrors to sample distances to plural positions for example across a circumference of the rotor house-bearing assembly. Further, LIDAR may provide reliable and accurate results regarding the radii.

According to an embodiment of the present invention, the plural first inner radii represent distances from a symmetry axis of the rotor house-bearing assembly to a radially inner rotor house wall surface, in particular to plural contact/mounting surfaces for magnet modules at the radially inner rotor house wall surface.

When the first inner radii are obtained, it may be simple to determine the positioning of different magnet modules which may have different heights, such that the assembly of rotor house including the mounted magnet modules exhibit a circular shape to a better accuracy.

According to an embodiment of the present invention, the, in particular circumferential, positions of the plural magnet modules at the rotor house are determined such that a circularity, in particular of outer surfaces of the plural magnet modules mounted at the rotor house which outer surfaces face radially inwards, is optimized when the magnet modules were mounted at the rotor house; and/or wherein the heights of plural magnet modules correspond to respective radial extents when mounted at the rotor house.

For example, the highest magnet modules may be placed at those positions of the rotor house, where the first radially inner radii have the largest values. Thereby, a simple method for determining the magnet module positions may be provided.

According to an embodiment of the present invention, each of the magnet modules comprises a base plate to be mounted at the rotor house mounting surface, a magnet fixed at the base plate and a cover covering the magnet, the outer surface of each of the plural magnet modules being an outer surface of the respective cover.

The base plate may for example have a rectangular shape. The magnet may be a permanent magnet which may be fixed using glue to the base plate. A cover may protect the magnet from damage. The cover may partly be welded to the base plate. Thereby, conventional magnet modules may be supported.

The magnet material may be housed an inox steal housing and then fixed in position with a glue, in order to reduce oxidation of the magnet material and protect the magnet material from damage.

According to an embodiment of the present invention, mounting the magnet modules at the rotor house according to the determined positions comprises: determining an insertion sequence of the magnet modules for plural mounting tracks at the rotor house inner surface based on the heights of the magnet modules and based on the first inner radii of the rotor house-bearing assembly.

Determining the insertion sequence may later on simplify the insertion of the magnets and also the mounting of the magnets.

All measurement results and derived results may be stored in an electronic storage for later usage for example. Data handling may be performed by an IT platform or data management system. A computing system including the data management system may also control different measurement equipment and/or mounting and assembling equipment as required.

According to an embodiment of the present invention, the stator base structure (fix shaft) is measured, in particular using LIDAR, in order to obtain center points and/or an axis joining the center points and/or a symmetry axis and/or information regarding orientation, in particular parallelism, of the first mounting surface and/or the second mounting surface.

Determination of the axes joining the center points of the first mounting surface and the second mounting surface may enable to arrange and mount the plural stator segments with respect to the joining axis, such that the maximum outer radius of the assembly comprising the mounted stator segments is less than the minimum second inner radius determined for the rotor assembly. Thereby, it may be easier to achieve an intended air gap size for the completely assembled generator.

According to an embodiment of the present invention, the plural stator segments are mounted at the stator base structure, such that a maximum or mean outer radius of the stator assembly outer surface is less than the second minimum radius of the rotor house-bearing assembly, in particular by an intended air gap.

The (e.g. 8-24) stator segments may be mounted directly or indirectly to the fix shaft (stator base structure) via stator plates. stator segments may be mounted to the stator plates that are mounted to the fix shaft (stator base structure). After measuring and adjustment at the FSAC the segments will be screwed to fix position

According to an embodiment of the present invention, during mounting the plural stator segments at the stator base structure, the positioning is monitored optically the mounting further comprising: iteratively adjusting position and/or orientation of the plural stator segments, in particular relative to the stator base structure, in dependence of the optical measurement results, in particular using an adjustment tool.

When during the mounting of the plural stator segments at the stator base structure the positioning is monitored in particular optically, it may be possible to readjust the positioning in order to comply with design requirements.

The adjustment tool may be a mechanical adjustment tool comprising for example a bolt having an outer threading which can be used using a nut for fine adjustment of position and/or orientation of one or more stator segments. The iterative process may be terminated, when a required accuracy or positioning requirements are satisfied.

According to an embodiment of the present invention, the method may further comprise, in particular after determining, using optical measurements, plural first inner radii of an assembly comprising a rotor house and a bearing across a circumference: adjusting relative position and/or orientation of the rotor house and the bearing, in order to reduce potential eccentricity; and/or reassembling the rotor house and the bearing; determining, using optical measurements, plural further first inner radii of the assembly comprising the rotor house and the bearing across a circumference; performing next steps of the manufacturing considering the further first inner radii.

The adjustment of the positioning may aim to bring symmetry axes of the bearing and the rotor house in coincidence. Thereby, eccentricity may be reduced. Thereby, also the intended air gap size of the completely assembled generator may adhere to a higher degree to design requirements.

All previously described or explained manufacturing steps which may originally be based on the values of the first inner radii may then be performed to depend on the further first inner radii.

According to an embodiment of the present invention, the method further comprises manufacturing or providing the rotor house as a cast, in particular integrally, formed part; and/or manufacturing or providing the stator base structure as a cast, in particular integrally, formed part.

The rotor house as well as the stator base structure may be each cast (steel or iron) parts which may not be changed regarding shape any more. However, their shape may be measured and also considered in subsequent manufacturing steps, in particular how to mount the plural stator segments and where to place which of the magnet modules which may then depend on the obtained measurement results regarding shape and/or geometry of the rotor house and/or the stator base structure.

According to an embodiment of the present invention, the method further comprises performing an optical air gap measurement (e.g. across the whole circumference, e.g. for one or two or three or even more different axial positions), in particular using at least one confocal (optical sensor) mounted at the rotor and/or the stator; and changing at least one manufacturing and/or adjustment parameter for a future manufacturing process in dependence of the air gap measurement.

The air gap measurement may be performed on the completely assembled generator. The air gap sizes may also be simulated by considering all measurements of the manufacturing process and also the adjustment operations. The simulated air gap sizes may be compared to the measured air gap sizes and from the comparison, changes in the manufacturing process may be provided so that the manufacturing process involving measuring and/or adjusting and assembling may be improved for any future manufacturing process.

It should be understood, that features, individually or in any combination, disclosed, described, applied or provided for a method of assembling a generator of a wind turbine may also, individually or in any combination, applied, provided or employed for a system for assembling a generator of a wind turbine, for example as corresponding features, according to embodiments of the present invention and vice versa.

According to an embodiment of the present invention it is provided a system for assembling a generator for a wind turbine, the system comprising: optical measurement and analysis equipment adapted to determine, using optical measurements, plural first inner radii of an assembly comprising a rotor house and a bearing across a circumference; height measuring equipment adapted to measure heights of plural magnet modules; determining equipment adapted to determine, in particular circumferential and/or axial, positions of the plural magnet modules at the rotor house based on their respective heights and based on the first inner radii of the rotor house-bearing assembly; calculating equipment adapted to calculate second inner radii of the rotor house-bearing assembly having magnet modules mounted according to the determined positions, and determining a minimum second inner radius; the optical measurement and analysis equipment being further adapted to measure geometry information of a first (front) mounting surface and/or a second (back) mounting surface of a stator base structure; mounting equipment adapted to mount plural stator segments, in particular including stator windings, at the stator base structure in dependence of the measured geometry of the first and/or second mounting surface of the stator base structure and the minimum second inner radius of the rotor house-bearing assembly, in order to obtain a stator assembly; coupling equipment adapted to couple the rotor house-bearing assembly, in particular via the bearing, with the stator assembly; magnet mounting equipment adapted to mount the magnet modules at the rotor house according to the determined positions; in particular an information management system adapted to store measurement results and supply them to equipment for manufacturing and/or adjustment.

Some of the measurement and/or assembling or mounting equipment may be combined in one or more units or devices or may be provided by distributed units or modules depending on the application.

According to an embodiment of the present invention it is provided a generator for a wind turbine manufactured according one of the preceding claims 1 to 12 and/or using a system according to a previous embodiment. The generator may be a permanent magnet synchronous generator.

According to an embodiment of the present invention it is provided a wind turbine, including: a rotor hub having plural rotor blades mounted; a generator according to the preceding embodiment wherein the rotor house is coupled with to the rotor hub.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 illustrates a partially broken away view of a generator according to an embodiment of the present invention;
Fig. 2 illustrates a data flow diagram as employed during a method of assembling a generator according to an embodiment of the present invention;
Fig. 3 illustrates a value stream employed for a method of assembling a generator according to an embodiment of the present invention;
Fig. 4 schematically illustrates a wind turbine according to an embodiment of the present invention.

### Detailed Description

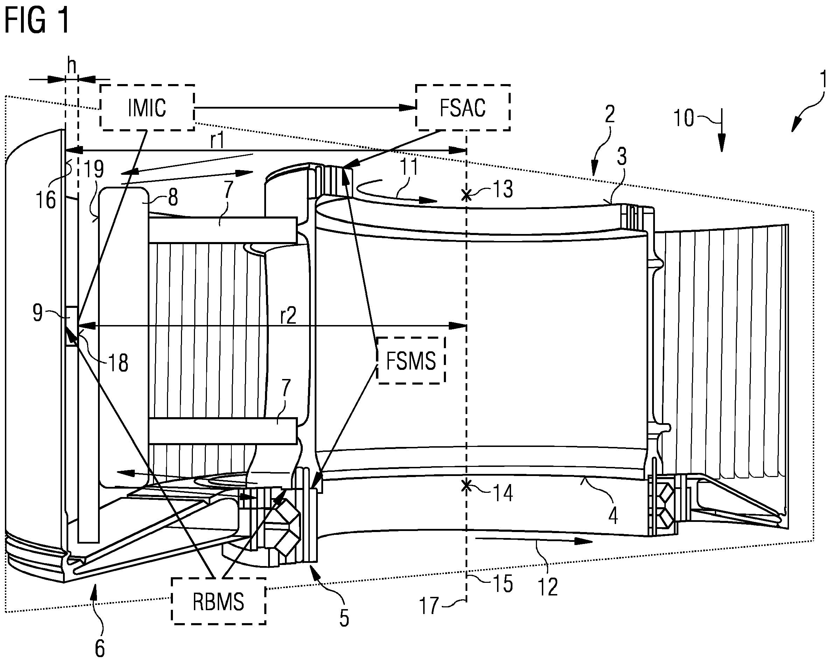

The generator 1 illustrated in **Fig. 1** in a partially broken away view comprises a stator base structure 2 which comprises a first mounting surface 3 and a second mounting surface 4. At the second mounting surface 4, a bearing 5 is mounted which is assembled with a rotor house 6. Using connection members 7, plural stator segments 8 are mounted at the stator base structure 2. At the rotor house 6, plural permanent magnets 9 are mounted (Fig. 1 only shows one magnet 9).

In the completely finished generator 1, plural permanent magnets 9 are inserted along an axial direction 10 being perpendicular to a circumferential direction 11 and also perpendicular to a radial direction 12 at plural circumferential positions.

The stator base structure 2 together with the plural stator segments 8 and the optional mounting equipment or mounting bars 7 form a stator assembly. The bearing 5 and the mounted rotor house 6 including the mounted permanent magnets form a rotor assembly.

The arrows labelled with reference sign FSMS indicate measurements performed during a fixed shaft measurement (FSMS). Herein, the geometry of the first and/or second mounting surfaces 3, 4 is measured resulting for example in the first center point 13 of the first mounting surface 3 and the second center point 14 of the second mounting surface 4. A joining axis 15 may represent a symmetry axis of the stator base structure 2.

The arrows labelled with RBMS indicate measurements of the geometry and in particular radii of the rotor house 6 mounted to the bearing 5. Thereby, first inner radii of the rotor house-bearing assembly are obtained. Furthermore, the arrow labelled with reference sign IMIC indicate measurement of heights of the magnet modules 9. The measurement data of the magnet heights as well as the measurement data provided by the rotor house geometry measurements provided by RBMS are used by the flexible stator adjustment center (FSAC) which adjusts or mounts the stator segments 8 in order to comply with the size and shape of the stator assembly. For example, the mounting bars 7 may be adapted in size such that the maximum outer radius of the stator assembly including the stator segments 8 is less than a minimal inner diameter of the rotor house with the mounted magnet modules 9.

The magnet measurements IMIC for example measure the magnet module height h as indicated in Fig. 1. The height is the extent of the magnet module 9 in the radial direction 12.

First radially inner radii r1 are indicated in Fig. 1 being the distance between the radially inner surface 16 of the rotor house 6 and the symmetry axis 17 of the rotor assembly. It is noted that the symmetry axis 17 of the rotor house should ideally be coincident with the symmetry axis 15 of the stator base structure 2. The second radii r2 may be the distance between the symmetry axis 17 of the rotor house and the outer surface 18 of the magnet module 9. The mean or maximum outer radius of the stator assembly is the mean or maximum distance between the symmetry axis 15 of the stator and the outer surface 19 of the stator assembly.

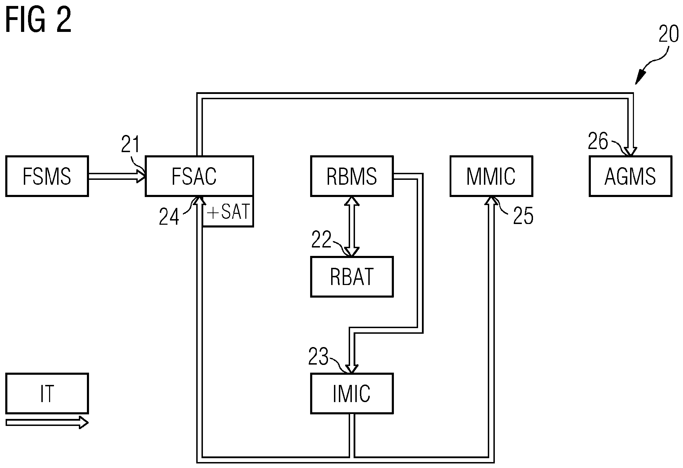

**Fig. 2** illustrates a data flow diagram 20 as may be employed for a method of assembling a generator according to an embodiment of the present invention. The FSMS (fixed shaft measurement system) provide measurement data 21 to the flexible stator adjustment center (FSAC). For example, the difference of the center points 13, 14 of the first and the second mounting surfaces 3, 4 of the stator base structure or for example the joining axis 15 may be provided from the FSMS to the FSAC. The completed generator may finally be measured by the AGMS (air gap measurement system). The fixed shaft measurement system creates input for the segment position on the stator (FSAC) reducing the static eccentricity coming from the difference between the center point of the drive end (DE) and the non-drive end (NDE) of the fixed shaft. The drive end of the fixed shaft may for example be represented by the second mounting surface 4 and the non-drive end may for example be represented by the first mounting surface 3 of the stator base structure 2 illustrated in Fig. 1.

The FSAC may include a machine or equipment which can easily be adapted to measure the next generation generator. A prediction engine based on several input data may feed the operator with relevant information to perform the correct adjustment of the stator segments 8 to create the best circular shape possible. The FSAC may also utilize a segment adjuster tool (SAT). The SAT may be a simple tool combined of a few machine elements, to lower complexity of handling, operator use, support requirement and maintenance. The input for the process may be a live feedback on the segment position shown on a screen to the operator at the FSAC.

The rotor bearing measurement system (RBMS) measures the rotor house-bearing assembly. The first measurement creates input for the machine adjusting the rotor position on the bearing (RBAT). The following verification measurement creates input for the segment position on the stator (FSAC) and input for the strategic magnet position (IMIC).

The rotor bearing adjustment tool (RBAT) analyzes the measurement results 22 received from RBMS regarding the first rotor-bearing measurement to quantify any dynamic eccentricity of the assembly. If the dynamic eccentricity is above 0.2 mm, the machine may start a process to correct this by repositioning the bearing in the rotor house. Then, the reassembled or readjusted assembly may be remeasured by RBMS.

The final rotor assembly measurement data 23 are provided to the IMIC module. The incoming magnet inspection cell (IMIC) may unpack, clean, scan, measure and repack all the permanent magnets of a batch which are intended to be included into the generator. The measurement of the magnet height creates input for the magnet position in the rotor (MMIC). The magnets are placed in vertical position for the MMIC to pick the right magnet for the insertion sequence to create the best circular shape possible of the rotor-magnet assembly.

The combined data of the rotor-magnet assembly creates input for the segment position on the stator (FSAC). The measurement data 24 provided from the IMIC to the FSAC may for example also comprise information regarding a minimum second diameter of the rotor house including a simulated mounted magnet. Thus, the data 24 may for example include radii for alignment. Further, the MMIC receives data 25, for example a sequence of magnets as determined by the IMIC. The magnet module insertion cell MMIC receives the sequence of magnets to be inserted and the MMIC picks the right magnet for the insertion sequence to create the best circular shape possible of the rotor-magnet assembly.

The data 23 provided from RBMS to IMIC may include input for the pairing calculation. The FSAC may provide predicted air gap size 26 which may later be compared with the actually measured air gap size as determined by AGMS. Depending on any potential deviation between the estimated or predicted air gap size and the actually measured air gap size, any manufacturing parameter may be adapted. The air gap measurement system (AGMS) creates the output of the efforts for controlling the size of the air gap. The AGMS may use confocal sensors in the stator and/or the rotor to detect the minimum, the maximum and the average air gap size including also static and dynamic eccentricity.

The IT-platform (IT) may be the brain of the measurement process. A production database may store and handle all measurement and adjustment data. The IT 8 may also control measurement process and assembling or adjustment processes.

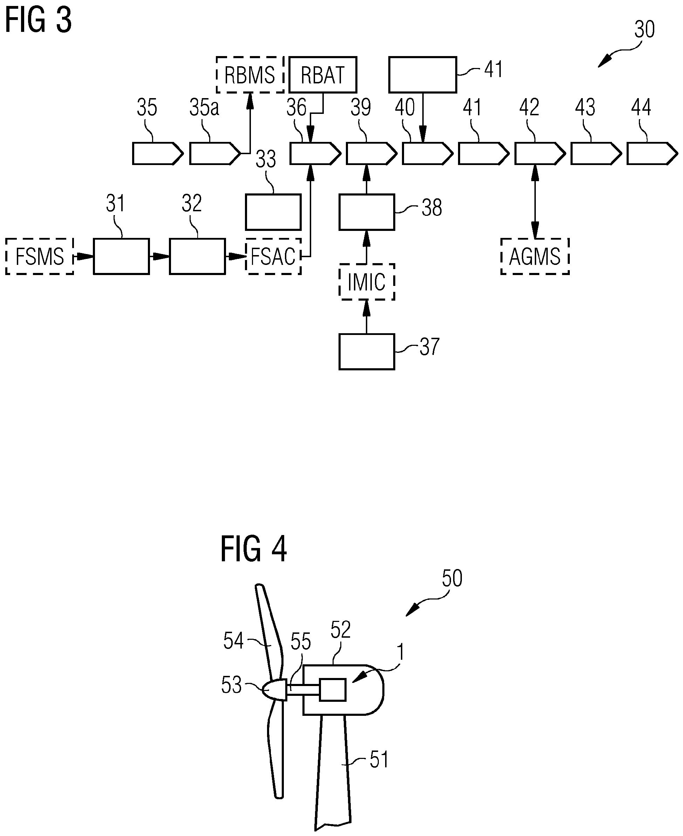

**Fig. 3** illustrates a value stream 30 which may be employed during or for a method of assembling a generator according to an embodiment of the present invention. The FSMS provides output to start manufacturing the stator in a block 31. In a block 32, a stator segment is assayed to be mounted at the stator base structure. At the module FSAC, the stator segment is mounted and potentially automatically adjusted in position and/or orientation.

Another branch of the value chain refers or relates to the bearing 34. The bearing is coupled to the rotor house in a block 35. The rotor house-bearing assembly is then measured in the block RBMS. Potentially, the assembly is readjusted in the module RBAT.

In a block 36, the stator assembly is married with the rotor assembly.

The permanent magnets (block 37) are measured in the module IMIC. According to the magnet heights, the magnets are sorted and stored in a module 38. The magnets are then mounted in block 39 to the radially inner surface of the rotor house.

Further, a brake system is provided in a block 40 after preparation of brakes in the module 41. Optional further tests may include testing 41, final inspection 42 (may also include the AGMS), paint touch up 43 and transport preparation 44.

The final air gap measurement occurs in module AGMS.

**Fig. 4** schematically illustrates a wind turbine 50 according to an embodiment of the present invention. The wind turbine comprises a wind turbine tower 51 on top of which a nacelle 52 is mounted. The nacelle 52 harbours a generator 1 according to an embodiment of the present invention which may be manufactured by a method of manufacturing a generator according to an embodiment of the present invention. The wind turbine comprises a rotor hub 53 at which plural rotor blades 54 are mounted. The rotor hub 53 is coupled, in particular via a main shaft 55, to the rotor of the generator 1.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of assembling a generator (1) for a wind turbine (50), the method comprising:
determining (RBMS), using optical measurements, plural first inner radii (r1) of an assembly comprising a rotor house (6) and a bearing (5) across a circumference;
measuring (IMIC) heights (h) of plural magnet modules (9) ;
determining, in particular circumferential and/or axial, positions of the plural magnet modules (9) at the rotor house (6) based on their respective heights (h) and based on the first inner radii (r1) of the rotor house-bearing assembly;
calculating second inner radii (r2) of the rotor house-bearing assembly having magnet modules (9) mounted according to the determined positions, and determining a minimum second inner radius;
measuring (FSMS) geometry information of a first mounting surface (3) and/or a second mounting surface (4) of a stator base structure (2);
mounting (FSAC) plural stator segments (8), in particular including stator windings, at the stator base structure (2) in dependence of the measured geometry of the first and/or second mounting surface (3, 4) of the stator base structure (2) and the minimum second inner radius of the rotor house-bearing assembly, in order to obtain a stator assembly;
coupling the rotor house-bearing assembly (5, 6), in particular via the bearing (5), with the stator assembly (2, 8, 7);
mounting (MMIC) the magnet modules (9) at the rotor house (6) according to the determined positions.

2. Method according to the preceding claim, wherein the plural first inner radii (r1) of the rotor house-bearing assembly are determined from optical measurements using a LIDAR, in particular for plural axial positions.

3. Method according to one of the preceding claims, wherein the plural first inner radii (r1) represent distances from a symmetry axis (17) of the rotor house-bearing assembly to a radially inner rotor house wall surface (16), in particular to plural contact/mounting surfaces for magnet modules at the radially inner rotor house wall surface (16).

4. Method according to one of the preceding claims,
wherein the, in particular circumferential, positions of the plural magnet modules (9) at the rotor house (6) are determined such that a circularity, in particular of outer surfaces of the plural magnet modules mounted at the rotor house which outer surfaces face radially inwards, is optimized when the magnet modules were mounted at the rotor house; and/or
wherein the heights (h) of plural magnet modules (9) correspond to respective radial extents when mounted at the rotor house.

5. Method according to one of the preceding claims, wherein each of the magnet modules (9) comprises a base plate to be mounted at the rotor house mounting surface, a magnet fixed at the base plate and a cover covering the magnet, the outer surface of each of the plural magnet modules being an outer surface of the respective cover.

6. Method according to one of the preceding claims, wherein mounting the magnet modules at the rotor house according to the determined positions comprises:
determining an insertion sequence of the magnet modules (9) for plural mounting tracks at the rotor house inner surface based on the heights of the magnet modules and based on the first inner radii of the rotor house-bearing assembly.

7. Method according to one of the preceding claims, wherein the stator base structure (2) is measured, in particular using LIDAR, in order to obtain center points (13, 14) and/or an axis (15) joining the center points and/or a symmetry axis and/or information regarding orientation, in particular parallelism, of the first mounting surface (3) and/or the second mounting surface (4).

8. Method according to one of the preceding claims, wherein the plural stator segments (8) are mounted at the stator base structure (2), such that a maximum or mean outer radius of the stator assembly outer surface (19) is less than the second minimum radius of the rotor house-bearing assembly, in particular by an intended air gap.

9. Method according to one of the preceding claims, wherein during mounting the plural stator segments (8) at the stator base structure, the positioning is monitored optically, in particular using LIDAR, the mounting further comprising:
iteratively adjusting position and/or orientation of the plural stator segments (8), in particular relative to the stator base structure (2), in dependence of the optical measurement results, in particular using an adjustment tool (SAT) .

10. Method according to one of the preceding claims, further comprising, in particular after (RBMS) determining, using optical measurements, plural first inner radii (r1) of an assembly comprising a rotor house and a bearing across a circumference:
(RBAT) adjusting relative position and/or orientation of the rotor house and the bearing, in order to reduce potential eccentricity, in particular to be below 0.2 mm; and/or
reassembling the rotor house and the bearing;
determining, using optical measurements, plural further first inner radii of the assembly comprising the rotor house and the bearing across a circumference;
performing next steps of the manufacturing considering the further first inner radii.

11. Method according to one of the preceding claims, further comprising:
manufacturing or providing the rotor house (6) as a cast, in particular integrally, formed part; and/or
manufacturing or providing the stator base structure (2) as a cast, in particular integrally, formed part.

12. Method according to one of the preceding claims, further comprising:
performing an air gap measurement (AGMS), in particular using at least one confocal probe mounted at the rotor and/or the stator; and
changing at least one manufacturing and/or adjustment parameter for a future manufacturing process in dependence of the air gap measurement.

13. System (20, 30) for assembling a generator (1) for a wind turbine (51), the system comprising:
optical measurement and analysis equipment (RBMS) adapted to determine, using optical measurements, plural first inner radii (r1) of an assembly comprising a rotor house (6) and a bearing (5) across a circumference;
height measuring equipment (IMIC) adapted to measure heights (h) of plural magnet modules (9);
determining equipment adapted to determine, in particular circumferential and/or axial, positions of the plural magnet modules (9) at the rotor house (6) based on their respective heights (h) and based on the first inner radii (r1) of the rotor house-bearing assembly;
calculating equipment adapted to calculate second inner radii (r2) of the rotor house-bearing assembly having magnet modules (9) mounted according to the determined positions, and determining a minimum second inner radius;
the optical measurement and analysis equipment (FSMS) being further adapted to measure geometry information of a first mounting surface (3) and/or a second mounting surface (4) of a stator base structure (2);
mounting equipment (FSAC) adapted to mount plural stator segments (8), in particular including stator windings, at the stator base structure (2) in dependence of the measured geometry of the first and/or second mounting surface (3,4) of the stator base structure (2) and the minimum second inner radius of the rotor house-bearing assembly, in order to obtain a stator assembly;
coupling equipment adapted to couple the rotor house-bearing assembly, in particular via the bearing, with the stator assembly;
magnet mounting equipment (MMIC) adapted to mount the magnet modules (9) at the rotor house (6) according to the determined positions;
in particular an information management system (IT) adapted to store measurement results and supply them to equipment for manufacturing and/or adjustment.

14. Generator (1) for a wind turbine (50) manufactured according one of the preceding claims 1 to 12 and/or using a system according to claim 13.

15. Wind turbine (50), including:
a rotor hub (53) having plural rotor blades (54) mounted;
a generator (1) according to the preceding claim wherein the rotor house is coupled with to the rotor hub.
